# EUROPEAN PATENT APPLICATION

(11) **EP 4 650 614 A1**
(43) Date of publication of application: **19.11.2025**
(21) Application number: 24176484.4
(22) Date of filing: 17.05.2024
(51) Int. Cl.: F16C 19/38, F16C 19/54, F16C 33/78, F16C 25/06

(54) **MAIN BEARING ARRANGEMENT WITH A PRELOAD ARRANGEMENT AND METHOD OF BLOCKING A PRELOAD FORCE ON A BEARING**

(71) Applicant: Siemens Gamesa Renewable Energy A/S, 7330 Brande (DK)
(72) Inventor: Redin, Juan, Titusville, 32780 (US)
(74) Representative: SGRE-Association

(57) **Abstract**

The invention relates to a main bearing unit (1) for a wind turbine drivetrain (2) comprising a housing (4), a low-speed shaft (3) and a first bearing (10) comprising an inner ring (11), an outer ring (12) and a plurality of rollers (17). The main bearing unit (1) further comprises a preload arrangement (30) for applying a preload to the first bearing (10) in the axial direction, wherein the preload arrangement (30) comprises a preload nut (31) and a retention ring (32) abutting against the preload nut (31) and configured to exert an axial force against the preload nut (31), wherein the preload nut (31) is arranged between the retention ring (32) and the inner ring (11) in an axial direction.

## Description

The present invention relates to a main bearing unit for a wind turbine drivetrain. The present invention further relates to a method of blocking a preload force on a bearing of said main bearing unit.

Wind turbines are increasingly used for the generation of electrical energy. A wind turbine comprises a tower and a nacelle mounted on the tower, to which a hub is attached. An aerodynamic rotor comprises rotor blades mounted to the hub and coupled to a generator. The rotor blades are oriented in such a way that wind passing over the blades turns the aerodynamic rotor, thereby driving the generator. Hence, the rotational energy of the blades is transferred to the generator, which then converts the mechanical energy into electricity and transfers the electricity to the electrical grid.

In an established type of wind turbine drivetrain, the low-speed shaft (or "main shaft") is turned by the aerodynamic rotor and connected to the drive end of a gearbox. The aerodynamic rotor comprising rotor blades is mounted to the hub and the hub is connected to the drive end of the low-speed shaft. The low-speed shaft is supported in a housing by a main bearing unit.

The main bearing unit comprises at least a bearing to support the low-speed shaft in the housing. Commonly, two bearings are arranged within the housing for better support. The bearings are usually roller bearings or fluid film bearings.

A well-known configuration of main bearing units comprises a matched pair of tapered roller bearings, with the "upwind" bearing installed about the front or drive end of the main shaft, and the "downwind" bearing installed about the rear or non-drive end of the shaft. A tapered roller bearing comprises an inner ring (the "cone"), an outer ring (the "cup") and tapered rollers arranged in a cage between the cone and the cup. The purpose of the bearings is to support the weight and the loads of the aerodynamic rotor. In a matched pair configuration, the gravitational load direction on the front bearing is "downwards", while the load direction on the rear bearing is "upwards".

Roller bearings are generally preloaded, since failure-free operation of the bearings requires that a minimum preload is maintained over the lifetime of the wind turbine. Through the preload, the outer ring is held in place to maintain the outer raceway substantially centered relative to the rollers and prevent a relative axial movement of the inner and outer ring. Thus, the preload allows the bearing to withstand large axial forces and overturning moments.

The correct preload of the bearing is of particular importance for the functional capability and service life of the bearing. If the preload is too weak, there is the risk that the rollers slip, thereby resulting in damages and that the bearing is no longer free of play under load and as a result in particular the rolling bearings will be loaded in a non-uniform manner, which leads to excessively strong peak loads and increased wear. If the preload is too strong, the rolling bearings will also be excessively loaded. In both cases the functionality of the bearing will be impaired and the mechanical efficacy of the wind turbine will be reduced, for example as a result of increased bearing friction. At the same time, the service life of the bearing will be significantly reduced, in particular as a result of increased wear.

Preload arrangements for applying a preload on roller bearings of main bearing units are known in the prior art.

US 2019186467 A1 discloses a preload arrangement comprising screws and sleeves, wherein the preload is achieved by turning the screws, which then pushes the inner ring towards the outer ring, thereby increasing the axial preload of the bearing and preventing an axial relative movement of the inner ring towards the outer ring. Other preload arrangements comprising shims used to suppress the gap producing by stretching the shaft and compressing the bearing set and housing are also known. The shim is then retained by a clamping mechanism fixed by fasteners, such as screws as described above.

A hydroelastic preload unit, where the axial preload force is achieved by hydroelastic means, such as a hose fillable with liquid, is also known from US 2015233420 A1.

Preload arrangements known from the prior art are over-restricted and not effective enough in maintaining a low scatter on the retention force. In addition, due to the over-restricted nature of such preload arrangements, the assembly of the main bearing unit is complicated, which is by itself very complex due to the large diameters of main bearing units of wind turbines, thereby requiring a high level of precision and expertise. In addition, during operation of the wind turbine, parasitic loads can lead to local displacement of such bearings, with detrimental consequences to the integrity of the bearings.

In the existing configurations, the bearing lifetime would typically exceed the service life of the wind turbine, so that it has not been necessary to facilitate maintenance procedures to exchange the main bearing unit or to reinstate the bearing preload. Instead, the established practice has been to engineer the main bearing unit according to the expected service life of the corresponding wind turbine. However, the service life of present-day wind turbines has been extended significantly, from 20 years (older wind turbines) to 25 - 35 years (modern wind turbines), and it is desirable that major components such as the main bearing unit should have a corresponding extended service life or "fatigue life".

It is known to preload a wind turbine main bearing unit during assembly to a level that includes margins for assembly tolerance, measurement tolerance, settlement, creep, wear and relaxation over the bearing's estimated service life. Since these margins are chosen to cover rarely occurring worst case situations, even a conservative preload level is already quite large, and a significant share of the fatigue damage that limits the service life arises from bearing preload. However, it is generally not possible to extend the service life of a main bearing unit by lowering the initial preload level with the aim of mitigating fatigue from preload, since insufficient preload leads to other types of wear that unavoidably result in premature fatigue damage.

Therefore, the longer service life of a wind turbine leads to problems with the main bearing unit, since the bearing preload levels, which make it possible to avoid service issues during a "short" wind turbine service life (ca. 20 years), cannot be decreased to extend the bearing service life to match a "long" wind turbine service life (e.g. 25 - 35 years) .

One way of increasing the fatigue or service lifetime of a main bearing is to make it larger, i.e. by increasing the overall dimensions of the rollers, races, bearing housing, etc. However, the costs of engineering the main bearing unit to the longer service life of a modern wind turbine adds significantly to the cost of the wind turbine.

It is therefore an object of the invention to overcome the problems outlined above. In particular, it is an object of the invention to provide a preload arrangement for a wind turbine main bearing unit configured to maintain the preload throughout the bearing service life and having an easier assembly than the preload arrangements known from the prior art.

According to the invention, a main bearing unit for a wind turbine drivetrain comprises a housing, a low-speed shaft extending in an axial direction and arranged within the housing, a first bearing comprising an inner ring, an outer ring and a plurality of rollers arranged between the inner ring and the outer ring, a second bearing comprising an inner ring, an outer ring and a plurality of rollers arranged between the inner ring and the outer ring, and a preload arrangement for applying a preload to the first bearing in the axial direction.

According to the invention, the first and second bearings are arranged in the radial direction between the housing and the low-speed shaft.

According to the invention, the preload arrangement comprises a preload nut and a retention ring, wherein the preload nut is arranged between the retention ring and the inner ring in an axial direction and wherein the preload nut abuts against the inner ring of the first bearing and is configured to exert and/or block an axial force against the inner ring of the first bearing, wherein the retention ring abuts against the preload nut and is configured to block the preload exerted on the first bearing.

The first bearing and the second bearing allow the low-speed shaft to be rotatable relative to the housing of the main bearing unit. The housing is usually a stationary component which supports the rotating low-speed shaft by means of the rollers arranged between the inner ring and the outer ring. For this, the first bearing is arranged in a radial direction between the housing and the low-speed shaft.

The first bearing and the second bearing can be axially adjustable for preloading the bearings against one another. Preloaded bearings have the advantage that they can take up radial forces, axial forces and tilting moments, and in so doing are free of play axially.

It is in particular an advantage of the invention that one of the primary causes of bearing damage, specifically an incorrect preload, in particular an excessively high or excessively low preload, can be avoided by accurately setting the preload with the preload arrangement. This helps avoid bearing damage with noticeable effects, for example reduced smoothness, increased vibration and noise emission, or increased heat development in the bearing. A correction or adaptation of the preload is thus made possible before damage occurs at the bearing, in particular at the rolling bearings. The optimal functionality of the bearing formed by means of the rolling bearings is thus ensured, the service life of the rolling bearings is improved, and a reduction in profits of a wind turbine as a result of limited functionality of the bearing as a whole or of the rolling bearings individually is thus avoided.

The preload nut is generally tightened on a thread at the surface of the low-speed shaft. Thus, by rotating the preload nut on the low-speed shaft, the preload nut shifts axially and increases the force exerted on the inner ring. This allows the preload force to be adjusted and fine-tuned by the turning of the preload nut to match the needs of the main bearing unit, which is then retained by the retention ring to keep the preload at the desired level. In addition, the setup and configuration is simpler than other preload arrangements known from the prior art.

Having two bearings increases the stability and the support of the low-speed shaft in the drive train, which is particularly useful in combination with applying the optimal preload for a balanced rotation of the low-speed shaft and a reduction of the wear on the rollers. This combination of features greatly increases the service life of the main bearing unit.

The preload on the first bearing can be applied by another tool not part of the preload arrangement, such as a hydraulic tool, before mounting the preload arrangement against the first bearing.

By applying a preload on the first bearing, the preload is automatically transferred to the second bearing, as both bearings support each other. Thus, the preload on both bearings of the main bearing unit can be achieved with a single preload arrangement arranged at the first bearing.

In particular, the first bearing is at the downwind side of the main bearing unit and the second bearing is at the upwind side of the main bearing unit.

According to an embodiment of the invention, an inner housing surface of the housing and an outer surface of the outer ring are pressed together in the radial direction by means of a press-fit connection. An outer shaft surface of the low-speed shaft and an inner bearing surface of the inner ring are pressed together in the radial direction by means of a press-fit connection. Through, the press-fit connection, the static housing is pressed together with the static outer ring and the rotating inner ring is pressed together with the rotating low-speed shaft so that both the inner ring and the low-speed shaft rotate together without slippage.

According to another embodiment of the invention, the inner ring of the first bearing comprises a first face extending in the radial direction, wherein the first face abuts against a low-speed shaft shoulder extending in the radial direction. The outer ring of the first bearing further comprises a second face extending in the radial direction, wherein the second face abuts against a housing shoulder extending in the radial direction. The inner ring of the first bearing further comprises a third face extending in the radial direction, the third face being arranged at an opposite side from the first face. With "abutting" it is meant that a surface of one component faces and is pressed together with a surface of a second component.

In particular, the preload nut abuts against the third face of the inner ring of the first bearing and configured to exert and/or block an axial force against the third face.

According to another embodiment of the invention, the preload arrangement further comprises a shim arranged between the retention ring and the low-speed shaft in the radial direction. The shim is particularly advantageous for coupling the retention ring to the low-speed shaft and blocking parasitic micro-movements of the retention ring.

According to another preferred embodiment of the invention, the shim is magnetized for keeping the shim in place during installation and/or for improving the connection between the shim and the low-speed shaft. Magnetizing the shim is a simple and cost-effective method for coupling the shim to the lower-speed shaft and afterwards for coupling the retention ring to the shim.

According to another preferred embodiment of the invention, the shim comprises a micromechanical interlocking surface at the side of the shim facing the low-speed shaft for increasing the friction between the shim and the low-speed shaft. The face of the low-speed shaft mating the face of the shim can also comprise a micromechanical interlocking surface. This is advantageous for increasing the friction and improving the connection between the two parts.

According to another preferred embodiment of the invention, the shim comprises a further micromechanical interlocking surface at the side of the shim facing the retention ring for increasing the friction between the shim and the retention ring. The face of the retention ring mating the face of the shim can also comprise a micromechanical interlocking surface.

According to another preferred embodiment of the invention, the shim comprises a plurality of sections. In particular, the sections are magnetized to the shaft. This eases the handling of the shim and the attachment of the shim to the outer circumferential surface of the low-speed shaft.

According to another preferred embodiment of the invention, the retention ring comprises a shoulder or a protrusion for abutting against a surface of the preload nut. A protrusion allows for a direct and defined localized contact between the retention ring and the preload nut. This is particularly advantageous for transferring the axial force from the retention ring to the preload nut in a precise manner. In addition, a protrusion reduces tilt moments compared to a flat abutting surface without protrusion. By reducing the tilt moments, it improves the load distribution onto the shim for an improved micromechanical interlocking of the shim to the shaft or to the retention ring.

According to another preferred embodiment of the invention, the main bearing unit further comprises a first seal extending in the radial direction between the housing and the preload nut. A seal prevents water or dirt from entering the inner part of the bearing, which greatly increases the wear of the rollers. In addition, a seal contains the lubricant in the chamber to prevent lack of lubrication of the bearing.

According to another preferred embodiment of the invention, the first seal is attached to the housing, wherein the first seal is configured to slide on the preload nut. The first seal can extend radially and slip over the surface of the preload nut.

According to another preferred embodiment of the invention, the main bearing unit further comprises a second seal extending in the radial direction between the housing and the preload nut. Having a two-stage seal greatly prevents the insertion of water and dirt or other abrasive material of reaching the first seal and the inner part of the bearing.

According to another preferred embodiment of the invention, the second seal is attached to the first seal, wherein the second seal is configured to slide on the preload nut and/or on the retention ring.

According to another preferred embodiment of the invention, the first bearing and/or the second bearing is a tapered roller bearing. The inner ring of tapered roller bearings is also called a cone and the outer ring is also called a cup. The cone can comprise a cage for holding the rollers. This bearing construction accommodates combined loads and provides low friction during operation. By adjusting one single row tapered roller bearing against a second tapered roller bearing and applying a preload, a rigid bearing application can be achieved.

According to another preferred embodiment of the invention, the pair of tapered roller bearings is arranged in an "X" or face-to-face configuration. In this configuration, each tapered roller bearing has a plurality of tapered rollers arranged relative to the rollers of the other tapered roller bearing, such that load reaction lines of the rollers converge towards the axis of the bearing, in a way that these load reaction lines configure an "X" shape, or it could be said that the rollers of one tapered roller bearing face the rollers of the other tapered roller bearing. Each roller has a rotation axis, and the respective load reaction line of each roller, is generally orthogonal to its rotation axis.

According to another preferred embodiment of the invention, the pair of tapered roller bearings is arranged in an "O" or back-to- back configuration. In this configuration, each tapered roller bearing has a plurality of tapered rollers arranged relative to the rollers of the other tapered roller bearing, such that load reaction lines of the rollers diverge towards the axis of the bearing, in a way that these load reaction lines configure an "O" shape, or it could be said that the rollers of one tapered roller bearing back the rollers of the other tapered roller bearing. The "O" arrangement allows for best support of the shaft against misalignments.

The pair of tapered roller bearings can withstand loads and bending moments in any direction and they can be set to the necessary endplay or preload to cope with temperatures. In particular, the two tapered roller bearings in back-to-back configuration, withstand axial forces equally in both axial directions, and are less sensitive to temperatures than the "X" configuration.

According to another embodiment of the invention, the main bearing unit further comprises a further preload arrangement for applying a preload to the second bearing in the axial direction, wherein the further preload arrangement comprises a further preload nut abutting against the inner ring of the second bearing and configured to exert and/or block an axial force against the inner ring, wherein the preload arrangement further comprises a further retention ring abutting against the further preload nut and configured to block the preload exerted on the second bearing, and wherein the further preload nut is arranged between the further retention ring and the inner ring of the second bearing in an axial direction.

According to another embodiment of the invention, the inner ring of the second bearing comprises a first face extending in the radial direction, wherein the first face abuts against a low-speed shaft shoulder extending in the radial direction. The outer ring of the second bearing further comprises a second face extending in the radial direction, wherein the second face abuts against a housing shoulder extending in the radial direction. The inner ring of the second bearing further comprises a third face extending in the radial direction, the third face being arranged at an opposite side from the first face. With "abutting" it is meant that a surface of one component faces and is pressed together with a surface of a second component.

According to another embodiment of the invention, the preload arrangement comprises a preload nut abutting against the third face of the inner ring of the second bearing and configured to exert and/or block an axial force against the third face.

According to another preferred embodiment of the invention, the further preload arrangement further comprises a further shim arranged between the further retention ring and the low-speed shaft in the radial direction.

According to another preferred embodiment of the invention, the further shim is magnetized for keeping the shim in place during installation and/or for improving the connection between the shim and the low-speed shaft. Magnetizing the shim is a simple and cost-effective method for coupling the shim to the lower-speed shaft and afterwards for coupling the retention ring to the shim.

According to another preferred embodiment of the invention, the further shim comprises a micromechanical interlocking surface at the side of the further shim facing the low-speed shaft for increasing the friction between the further shim and the low-speed shaft. The face of the low-speed shaft mating the face of the further shim can also comprise a micromechanical interlocking surface. This is advantageous for increasing the friction and improving the connection between the two parts.

According to another preferred embodiment of the invention, the further shim comprises a further micromechanical interlocking surface at the side of the further shim facing the retention ring for increasing the friction between the further shim and the retention ring. The face of the retention ring mating the face of the further shim can also comprise a micromechanical interlocking surface.

Yet another aspect of the invention relates to a method of blocking a preload force on a bearing of a main bearing unit according to any of the preceding claims, the method comprising the steps of:
- turning the preload nut until the preload nut abuts against the inner ring of the first bearing and until the desired preload on the bearing is blocked,
- heating the retention ring for increasing its inner diameter,
- aligning and sliding the heated retention ring on the outer shaft surface of the low-speed shaft until the retention ring abuts against the preload nut, and
- letting the retention ring cool down and lock on the low-speed shaft for locking the preload force of the preload arrangement on the bearing.

Heating allows for an easier insertion of the retention ring on the low-speed shaft, which makes the adjustment of the preload on the bearing easier. Once the adjustment is set to the defined preload, the retention ring cools down and chokes the low-speed shaft, thereby blocking the position of the preload nut on the low-speed shaft and blocking the preload force on the bearing.

According to another preferred embodiment of the invention, the method further comprising the step of aligning and sliding a shim on the outer shaft surface of the low-speed shaft before the step of aligning and sliding the heated retention ring on the outer shaft surface.

According to another preferred embodiment of the invention, the method further comprising the step of applying a preload by means of a preload tool, such as a hydraulic pressing tool, before the step of turning the preload nut until the preload nut abuts against the inner ring of the first bearing and until the desired preload on the bearing is blocked.

Dismounting the assembly can be done by heating the retention ring and pulling it out once there is a clearance. The shims can be removed by hand.

In order to facilitate the understanding of the characteristics of the invention and being an integral part of this specification, some drawing sheets are attached on which figures, with an illustrative but not limiting character, the following is represented:
Figure 1 shows a main bearing unit of a wind turbine drivetrain comprising a first bearing and a second bearing;
Figure 2 shows a second bearing of a main bearing unit of a wind turbine drivetrain according to an embodiment of the invention.
Figures 3 and 4 show the steps of exerting and/or blocking a preload force on a bearing of a main bearing unit as shown in Figure 2.

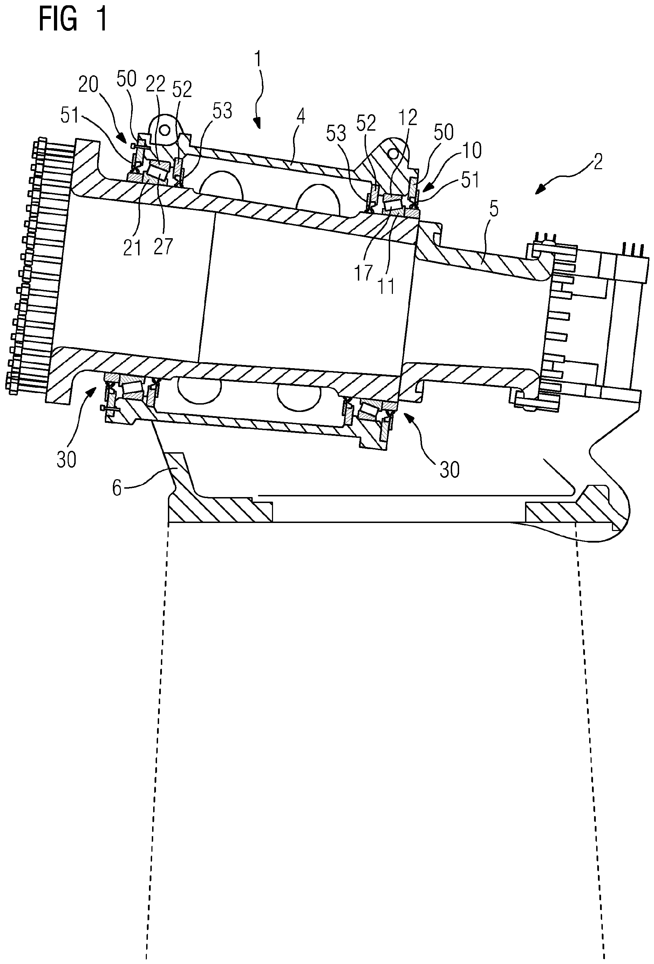

Figure 1 shows a cross-section through part of a wind turbine drivetrain 2, showing a main bearing unit 1 arranged about a low-speed shaft 3, and a coupling interface 5 at the downwind end of the low-speed shaft 3 connecting the low-speed shaft 3 with the next stage of the drivetrain 2, such as the gearbox. The main bearing unit 1 comprises a matched pair of tapered roller bearings 10, 20 enclosed in a bearing housing 4. In this exemplary embodiment, the housing 4 is secured to a bedplate 6 with a flat base for mounting to the top of a wind turbine tower indicated by ghost lines. Each bearing 10, 20 comprises tapered rollers 17, 27 arranged between an inner ring 11, 21 or "cone" and an outer ring 22, 12 or "cup".

The main bearing unit 1 further comprises a preload arrangement 30 at each bearing 10, 20 for applying a preload to each bearing 10, 20 in the axial direction. In addition, seals 50, 51, 52, 53 are arranged upwind and downwind at each bearing 10, 20 to prevent contaminants from entering or leaving the bearing space.

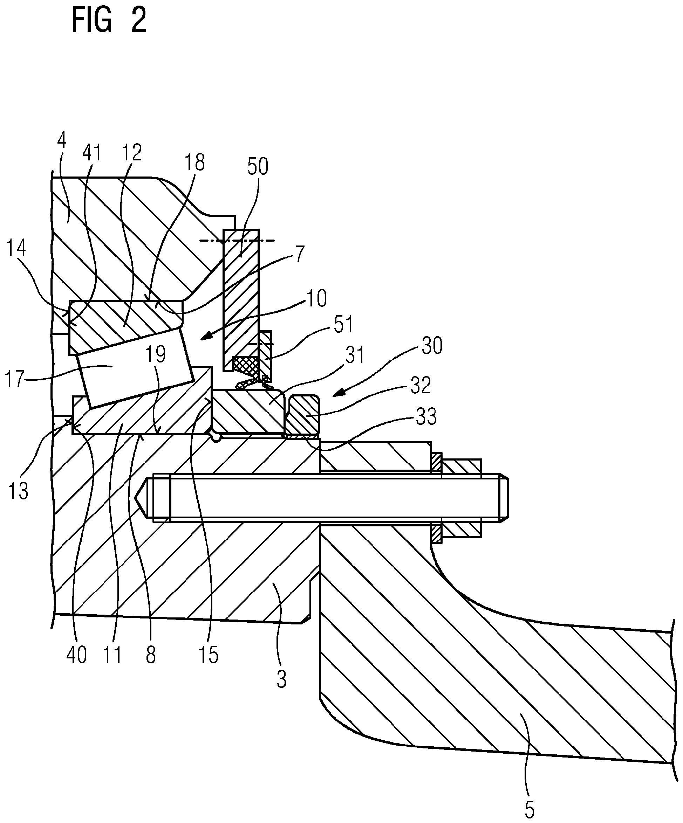

Figure 2 shows a first bearing 10 of a main bearing unit 1 of a wind turbine drivetrain 2 according to an embodiment of the invention. The first bearing 10 comprises an inner ring 11, an outer ring 12 and a plurality of rollers 17 arranged between the inner ring 11 and the outer ring 12. The first bearing 10 is arranged in a radial direction between the housing 4 and the low-speed shaft 3.

An inner housing surface 7 of the housing 4 and an outer surface 18 of the outer ring 12 are pressed together in the radial direction by means of a press-fit connection. An outer shaft surface 8 of the low-speed shaft 3 and an inner bearing surface 18 of the inner ring 11 are pressed together in the radial direction by means of a press-fit connection.

The inner ring 11 further comprises a first face 13 extending in the radial direction, wherein the first face 13 abuts against a low-speed shaft shoulder 40 extending in the radial direction.

The outer ring 12 further comprises a second face 14 extending in the radial direction, wherein the second face 14 abuts against a housing shoulder 41 extending in the radial direction.

The inner ring 11 further comprises a third face 15 extending in the radial direction, the third face 15 being arranged at an opposite side from the first face 13.

The main bearing unit 1 further comprises a preload arrangement 30 for applying a preload to the first bearing 10 in the axial direction, wherein the preload arrangement 30 comprises a preload nut 31 abutting against the third face 15 of the inner ring 11 and configured to exert and/or block an axial force against the third face 15.

The preload arrangement 30 further comprises a retention ring 32 abutting against the preload nut 31 and configured to lock the preload force of the preload arrangement 30. The preload nut 31 is arranged between the retention ring 32 and the inner ring 11 in an axial direction.

The preload arrangement 30 further comprises a shim 33 arranged between the retention ring 32 and the low-speed shaft 3 in the radial direction.

The low-speed shaft 3 is connected to a coupling interface 5 connecting the low-speed shaft 3 with the next stage of the drivetrain 2 by means of a fastener.

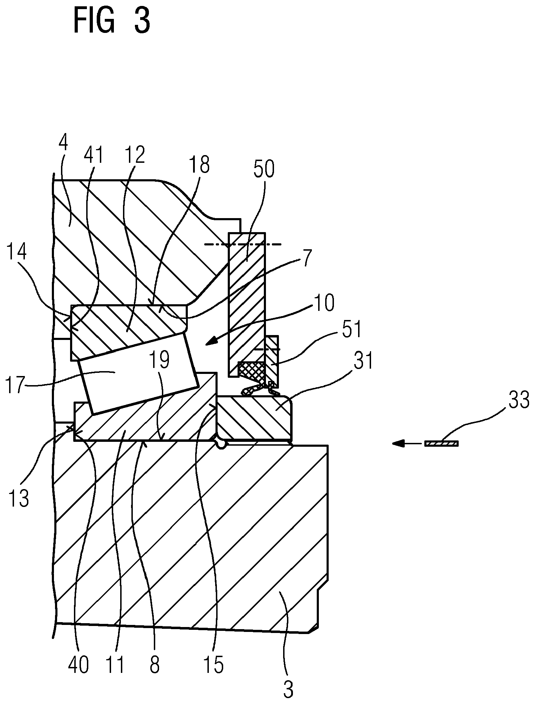

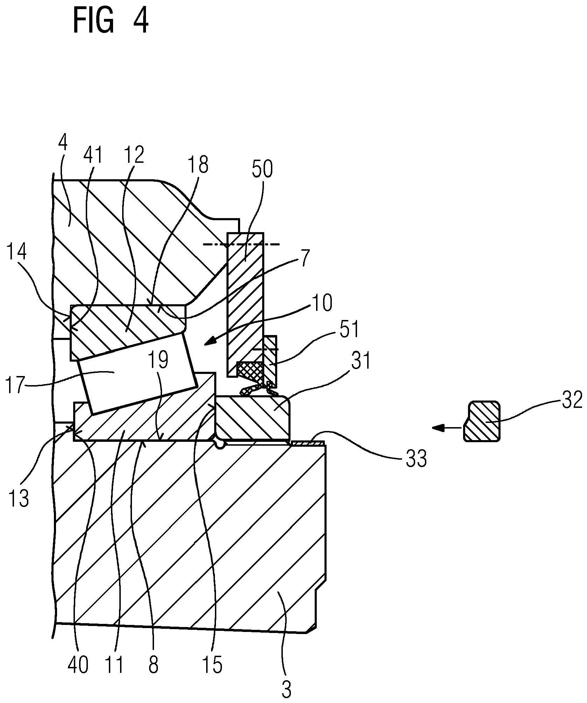

Figures 3 and 4 show the steps of exerting and/or blocking a preload force on a bearing 10 of a main bearing unit 1 as shown in Figure 2.

As shown in Figure 3, the shim 33 is aligned and slides on the outer shaft surface 8 of the low-speed shaft 3 until the shim 33 abuts against the preload nut 31, as shown in Figure 4. For an easier handling and installation, the shim 33 can comprise a plurality of sections. It is also possible to magnetize the shim 33 for improving the coupling of the shim 33 to the low-speed shaft 3.

Next and as shown in Figure 4, the retention ring 32 is aligned and slides on the outer shaft surface 8 of the low-speed shaft 3 until the retention ring 32 abuts against the preload nut 31. For an easier aligning and sliding, the retention ring 32 can be heated to increase its inner circumference.

Then, the preload on the bearing 10 is adjusted by axially pressing the retention ring 32 towards or away from preload nut 31 to the desired preload.

At last, the retention ring 32 cools down and locks on the low-speed shaft 3 for locking the preload force of the preload arrangement 30 on the bearing 10.

### Reference numbers

- 1: Main bearing unit
- 2: Drivetrain
- 3: Low-speed shaft
- 4: Housing
- 5: Coupling interface
- 6: Bedplate
- 7: Inner housing surface
- 8: Outer shaft surface

- 10: First bearing
- 11: Inner ring
- 12: Outer ring
- 13: First face
- 14: Second face
- 15: Third face
- 17: Roller
- 18: Outer bearing surface
- 19: Inner bearing surface

- 20: Second bearing
- 21: Inner ring
- 22: Outer ring
- 23: First face
- 24: Second face
- 25: Third face
- 27: Roller
- 28: Outer bearing surface
- 29: Inner bearing surface

- 30: Preload arrangement
- 31: Preload nut
- 32: Retention ring
- 33: Shim

- 40: Low-speed shaft shoulder
- 41: Housing shoulder
- 50: First seal
- 51: Second seal
- 52: Third seal
- 53: Fourth seal

## Claims

1. A main bearing unit (1) for a wind turbine drivetrain (2) comprising
a housing (4),
a low-speed shaft (3) extending in an axial direction and arranged within the housing (4),
a first bearing (10) comprising an inner ring (11), an outer ring (12) and a plurality of rollers (17) arranged between the inner ring (11) and the outer ring (12),
a second bearing (20) comprising an inner ring (21), an outer ring (22) and a plurality of rollers (27) arranged between the inner ring (21) and the outer ring (22), and
a preload arrangement (30) for applying a preload to the first bearing (10) in the axial direction,
wherein the first and second bearings (10, 20) are arranged in the radial direction between the housing (4) and the low-speed shaft (3),
wherein the preload arrangement (30) comprises a preload nut (31) and a retention ring (32),
wherein the preload nut (31) is arranged between the retention ring (32) and the inner ring (11) in an axial direction,
wherein the preload nut (31) abuts against the inner ring (11) of the first bearing (10) and is configured to exert and/or block an axial force against the inner ring (11) of the first bearing (10),
wherein the retention ring (32) abuts against the preload nut (31) and is configured to block the preload exerted on the first bearing (10).

2. The main bearing unit (1) according to claim 1, wherein the preload arrangement (30) further comprises a shim (33) arranged between the retention ring (32) and the low-speed shaft (3) in the radial direction.

3. The main bearing unit (1) according to claim 2, wherein the shim (33) is magnetized for keeping the shim in place during installation and/or for improving the connection between the shim (33) and the low-speed shaft (3).

4. The main bearing unit (1) according to claim 2 or 3, wherein the shim (33) comprises a micromechanical interlocking surface at the side of the shim (33) facing the low-speed shaft (3) for increasing the friction between the shim (33) and the low-speed shaft (3).

5. The main bearing unit (1) according to any of the claims 2 to 4, wherein the shim (33) comprises a further micromechanical interlocking surface at the side of the shim (33) facing the retention ring (32) for increasing the friction between the shim (33) and the retention ring (32) .

6. The main bearing unit (1) according to any of the preceding claims, wherein the retention ring (32) comprises a shoulder or a protrusion for abutting against a surface of the preload nut (31).

7. The main bearing unit (1) according to any of the preceding claims, wherein said main bearing unit (1) further comprises a first seal (50) extending in the radial direction between the housing (4) and the preload nut (31).

8. The main bearing unit (1) according to claim 5, wherein the first seal (50) is attached to the housing (4), wherein the first seal (50) is configured to slide on the preload nut (31).

9. The main bearing unit (1) according to any of the claims 7 or 8, wherein said main bearing unit (1) further comprises a second seal (51) extending in the radial direction between the housing (4) and the preload nut (31) .

10. The main bearing unit (1) according to claim 9, wherein the second seal (51) is attached to the first seal (50), wherein the second seal (51) is configured to slide on the preload nut (31) and/or on the retention ring (32).

11. The main bearing unit (1) according to any of the preceding claims, wherein the first and second bearings (10, 20) are a tapered roller bearing.

12. The main bearing unit (1) according to claim 11, wherein the pair of tapered roller bearings (10, 20) is arranged in an X configuration or in an O configuration.

13. The main bearing unit (1) according to any of the preceding claims, wherein the main bearing unit (1) further comprises a further preload arrangement (30) for applying a preload to the second bearing (20) in the axial direction.

14. Method of blocking a preload force on a bearing (10, 20) of a main bearing unit (1) according to any of the preceding claims, the method comprising the steps of:
- turning the preload nut (31) until the preload nut (31) abuts against the inner ring (11) of the first bearing (10) and until the desired preload on the bearing (10,20) is blocked,
- heating the retention ring (32) for increasing its inner diameter,
- aligning and sliding the heated retention ring (32) on the outer shaft surface (8) of the low-speed shaft (3) until the retention ring (32) abuts against the preload nut (31), and
- letting the retention ring (32) cool down and lock on the low-speed shaft (3) for locking the preload force of the preload arrangement (30) on the bearing (10, 20).

15. The method according to claim 14 further comprising the step of aligning and sliding a shim (33) on the outer shaft surface (8) of the low-speed shaft (3) before the step of aligning and sliding the heated retention ring (32) on the outer shaft surface (8).
